# EUROPÄISCHE PATENTSCHRIFT

(11) **EP 1 439 285 B1**
(45) Veröffentlichungstag und Bekanntmachung des Hinweises auf die Patenterteilung: **07.05.2008**
(21) Anmeldenummer: 03029868.1
(22) Anmeldetag: 27.12.2003
(51) Int. Cl.: F01L 1/26, F16K 31/06, F15B 13/04

(54) **Elektromagnetisches proportionalventil mit Bypass einer Nockenwellenverstelleinrichtung einer Brennkraftmaschine**
Electromagnetic proportional valve with bypass for a cam shaft adjuster for an internal combustion engine
Vanne électromagnétique proportionelle avec bypass d' un dispositif de réglage d'arbre à cames pour un moteur à combustion interne

(30) Priorität: 14.01.2003 DE 10300974
(43) Veröffentlichungstag der Anmeldung: 21.07.2004
(73) Patentinhaber: Hydraulik-Ring GmbH, 97828 Marktheidenfeld (DE)
(72) Erfinder: Cornea, Marius, 97816 Lohr/Main (DE)
(74) Vertreter: Bergemann, Holger Dirk

(56) Entgegenhaltungen:
- EP-A- 0 879 979
- US-A- 3 776 273
- US-A- 4 095 628
- US-A- 4 274 504
- US-A- 4 537 164
- US-A- 5 474 105
- US-B1- 6 453 947

## Beschreibung

Die Erfindung betrifft eine Nockenwellenverstelleinrichtung für Kraftfahrzeuge nach dem Oberbegriff des Anspruches 1

Mit Nockenwellenverstelleinrichtungen wird der Kraftstoffbedarf eines Verbrennungsmotors an seine jeweils abzugebende Leistung angepaßt. Hierbei wird der Hub der Einlaßventile so verstellt, daß die für die abzugebende Leistung erforderliche Kraftstoffmenge in den Verbrennungsraum eingespritzt wird. Um den Ventilhub zu verändern, wird die Nockenwelle relativ zur Kurbelwelle verdreht. Hierfür ist ein Versteller vorgesehen, der mit einem Hydrozylinder vergleichbar ist. Als Druckmittel dient das Hydrauliköl des Verbrennungsmotors. Als Druckölquelle wird der Schmierölkreislauf des Verbrennungsmotors herangezogen. Die Betätigung des Verstellers erfolgt über das Proportionalmagnetventil.

Es sind im wesentlichen zwei verschiedene Arten von Verstellern im Einsatz, nämlich Versteller mit Schrägverzahnung und Drehflügelversteller. Das Druckmedium wird vom Proportionalmagnetventil über einen Drehübertrager dem Versteller zugeführt. Die Drehübertrager weisen mehr oder weniger Leckage auf. Problematisch hierbei ist, daß diese Leckage zwischen den beiden Arbeitsanschlüssen unterschiedlich groß ist.

Die Versteller mit Schrägverzahnung weisen größere interne Reibungskräfte auf als die Drehflügelversteller. Andererseits ist jedoch eine gewisse Reibung besser für die Schwingungsdämpfung. Die Proportiorlalmagnetventilä der bekannten Nockenwellenverstelleinrichtungen müssen ein hydraulisches Einspannen des Verstellelementes gewährleisten. Bei Verstellern mit Schrägverzahnung ist das Verstellelement ein Kolben, während bei Drehflügelverstellern ein Rotor mit radial abstehenden Flügeln als Verstellelement vorgesehen ist. Bei Verstellern mit Schrägverzahnung reicht eine Ablaufsteuerung zum hydraulischen Einspannen des Kolbens aus. Drehflügelversteller, kombiniert mit dem Drehübertrager, haben eine relativ große Lekkage, was dazu führt, daß das Verstellelement nicht optimal eingespannt ist. Problematisch ist ferner, daß bei fehlendem Öldruck in einer der Druckkammern des Verstellers der Verriegelungsmechanismus nicht mehr entriegelt wird.

Es ist eine Ventitbetätigungseinrichtung bekannt (US-A-4 537 164)-, die einen Kolben aufweist, der mit einer Bypassbohrung versehen ist. Sie verbindet den Druckanschluß mit dem Arbeitsanschluß der Einrichtung Über diese Bypassleitung gelangt Hydrauliköl in einer solchen Menge in einen Ölpfad, daß einerseits der Kolben nicht verschoben wird, andererseits Luft, die sich im Ölpfad befindet, eliminiert wird.

Der Erfindung liegt die Aufgabe zugrunde, die gattungsgemäße Nockenwellenverstelleinrichtung so auszubilden, daß das Verstellerelement optimal eingespannt ist und der Verriegelungsmechanismus des Verstellers jederzeit entriegelt wird.

Diese Aufgabe wird bei der gattungsgemäßen Nockenwellenverstelleinrichtung erfindungsgemäß mit den kennzeichnenden Merkmalen des Anspruches 1 gelöst.

Bei der erfindungsgemäßen Nockenwellenverstelleinrichtung wird durch das Proportionalmagnetventil ein Leckagedurchtritt sichergestellt, so daß im System auftretende Leckage zuverlässig kompensiert wird. Über den Leckagedurchtritt wird der Arbeitsanschluß stets mit dem Druckmedium versorgt, auch dann, wenn dieser Arbeitsanschluß geschlossen ist. Dadurch wird ständig ein gewisser Druckmediumstrom erreicht, der ventilexterne Systemleckagen kompensiert. Dadurch ist sichergestellt, daß das Verstellerelement (Kolben bzw. Rotor) einwandfrei hydraulisch eingespannt ist und daß der Verriegelungsmechanismus in einer der Kammern des Verstellers zuverlässig entriegelt wird.

Weitere Merkmale der Erfindung ergeben sich aus den weiteren Ansprüchen, der Beschreibung und der Zeichnung.

Die Erfindung wird nachstehend anhand zweier in den Zeichnungen dargestellter Ausführungsbeispiele näher erläutert. Es zeigen
- Fig. 1: im Axialschnitt eine erste Ausführungsform eines erfindungsgemäßen Ventils mit axialem Druckanschluß,
- Fig. 2: im Axialschnitt eine zweite Ausführungsform eines erfindungsgemäßen Ventils mit radialem Druckanschluß.

Das Ventil ist Teil einer Nockenwellenverstellung, mit der eine variable Ventilsteuerung bei Verbrennungsmotoren durch eine kontinuierliche Verdrehung der Nockenwelle relativ zur Kurbelwelle ermöglicht wird. Die Relativbewegung zwischen der Nockenwelle und der Kurbelwelle erfolgt in bekannter Weise durch einen Versteller, der nach Art eines Hydrozylinders arbeitet. Druckölquelle ist der Schmierölkreislauf des Motors. Der Versteller wird über das Ventil betätigt, das ein Proportionalmagnetventil ist. Das Ventil hat ein Ventilgehäuse 1, das an ein Gehäuse 2 eines Elektromagnetteiles 3 angeschlossen ist. Im Ausführungsbeispiel hat das Ventilgehäuse 1 mit Abstand von seinem einen Ende einen radial nach außen gerichteten Flansch 4, mit dem es an einer Stirnseite des Gehäuses 2 anliegt. Die Verbindung zwischen dem Ventilgehäuse 1 und dem Elektromagnetteil-Gehäuse 2 erfolgt in herkömmlicher Weise, beispielsweise durch einen Bördelungsvorgang, bei dem ein Teil des Gehäuses 2 um den Flansch 4 des Ventilgehäuses 1 gebördelt wird.

Im Ventilgehäuse 1 ist ein Hohlkolben 5 verschiebbar gelagert, der an seinem dem Elektromagnetteil 3 zugewandten Ende mit einem geschlossenen Boden 6 versehen ist. An seiner Außenseite liegt ein Stößel 7 des Elektromagnetteiles 3 an. Der Hohlkolben 5 kann vom Stößel 7 gegen die Kraft wenigstens einer Schraubendruckfeder 8 axial verschoben werden. Die Druckfeder 8 ragt in den Hohlkolben 5 und stützt sich mit einem Ende an einer radial nach innen gerichteten Schulterfläche 9 in der Innenwand des Hohlkolbens 5 ab. Das andere Ende der Druckfeder 8 liegt an einem in das Ventilgehäuse 1 eingesetzten Sicherungsring 10 an. Vorteilhaft wird er in das Ventilgehäuse 1 geschraubt oder gepreßt, so daß durch unterschiedlich weites Einschrauben oder Einpressen dieses Sicherungsringes 10 die Vorspannkraft der Druckfeder 8 stufenlos eingestellt werden kann. Das Ventilgehäuse 1 ist an seinem den Sicherungsring 10 aufweisenden Ende an eine Druckmittelquelle angeschlossen, über die das Druckmedium, vorzugsweise Hydrauliköl, mit dem Druck P dem Ventilgehäuse 1 und dem Hohlkolben 5 zugeführt wird.

Der Hohlkolben 5 ist im Ventilgehäuse 1 geführt und weist nahe seinem dem Sicherungsring 10 zugewandten Ende wenigstens eine Radialbohrung 11 auf. Vorteilhaft sind über den Umfang des Hohlkolbens 5 gleichmäßig verteilt mehrere Radialbohrungen 11 vorgesehen.

Der Hohlkolben 5 ist außerdem etwa in halber Länge mit einer Umfangsnut 12 versehen, so daß der Hohlkolben 5 im Bereich dieser Nut 12 Abstand von der Innenwand des Ventilgehäuses 1 hat. Aufgrund dieser Umfangsnut 12 ist der Hohlkolben 5 in diesem Bereich dünnwandig ausgebildet, während er in den anschließenden Bereichen dickere Wandstärke hat.

Das Ventilgehäuse 1 ist mit zwei Arbeitsanschlüssen A und B sowie einem Tankanschluß T verbunden. Je nach Stellung des Hohlkolbens 5 wird das über den Druckanschluß P axial zugeführte Druckmedium einem der Arbeitsanschlüsse A oder B zugeführt. Im Bereich der Anschlüsse A, B, T kann das Ventilgehäuse innenseitig mit jeweils einer Umfangsnut 13 bis 15 versehen sein, in die jeweils wenigstens eine Radialbohrung im Ventilgehäuse 1 mündet.

Mit geringem Abstand vom Boden 6 ist der Hohlkolben 5 mit Radialbohrungen 16 versehen, die vorteilhaft gleichmäßig verteilt über den Umfang des Hohlkolbens 5 angeordnet sind.

Das Proportionalmagnetventil wird in einen (nicht dargestellten) Einbauraum am Verbrennungsmotor oder am Fahrzeug eingebaut und durch wenigstens eine Ringdichtung 17 abgedichtet. Sie liegt in einer Ringnut 18 in der Außenwand des Gehäuses 2 des Elektromagnetteils 3.

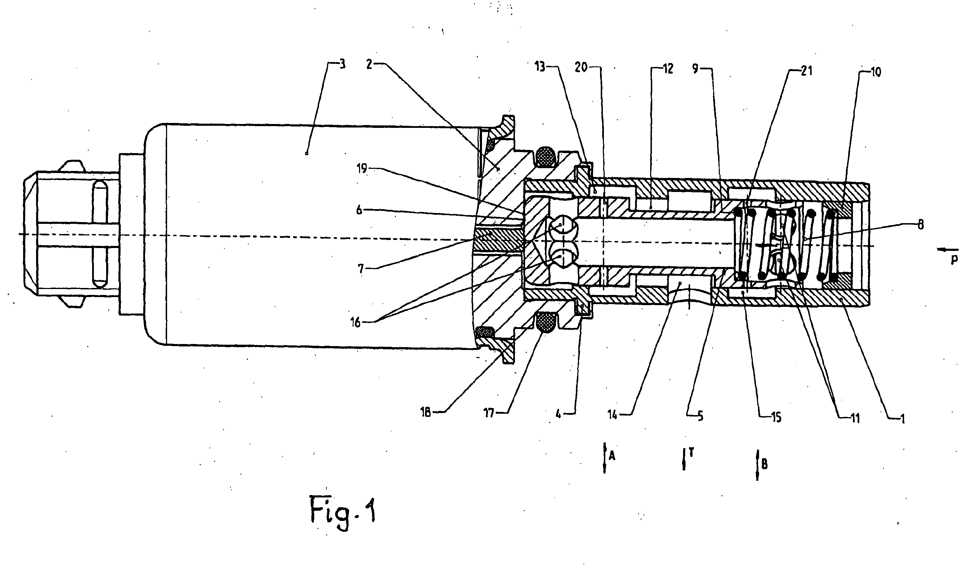

In der in Fig. 1 dargestellten Ausgangslage ist der Elektromagnet nicht erregt, so daß der Stößel 7 eingefahren ist und der Hohlkolben 5 mit seinem Boden 6 an einer Radialfläche 19 des Gehäuses 2 anliegt. Das über den Druckanschluß P zugeführte Druckmedium strömt in den Hohlkolben 5 und kann über die Radialbohrungen 11 zum Arbeitsanschluß B des Verstellers strömen. Dadurch wird in bekannter Weise ein Kolben oder ein Rotor des Verstellers entsprechend bewegt, um die Nockenwelle gegenüber der Kurbelwelle zu verstellen. Das durch die Verstellung des Kolbens oder des Rotors des Verstellers verdrängte Druckmedium strömt über den Tankanschluß T des Proportionalmagnetventiles zum Tank zurück. In dieser Stellung des Hohlkolbens 5 ist der Arbeitsanschluß A vom Druckanschluß P getrennt. Um eine Kompensation der ventilexternen Systemleckage zu erhalten, ist der Hohlkolben 5 mit wenigstens einer seine Wandung durchsetzenden Leckagebohrung 20 versehen, über die ständig ein geringer Teil des Druckmediums auch dann zum Arbeitsanschluß A strömen kann, wenn der Hohlkolben 5 diesen Arbeitsanschluß A sperrt, wie in der Zeichnung dargestellt. Vorteilhaft sind mehrere solcher Leckagebohrungen 20 über den Umfang verteilt am Hohlkolben 5 vorgesehen. Über diese Leckagebohrung 20 gelangt das Leckagemedium auch zum Tankanschluß T, über den es in den Tank zurückströmen kann.

Wird der Elektromagnet erregt, wird der Stößel 7 ausgefahren, der den Hohlkolben 5 gegen die Kraft der Druckfeder 8 verschiebt. Je nach Verschiebeweg des Hohlkolbens 5 kann der Durchströmquerschnitt des Druckmediums in den Arbeitsanschluß P eingestellt oder ganz verschlossen werden. Wird der Hohlkolben 5 aus der in der Zeichnung dargestellten Lage ausreichend weit durch den Stößel 7 verschoben, wird der Arbeitsanschluß B gegen den Druckanschluß P geschlossen und dafür der Arbeitsanschluß A geöffnet. Dann kann das Druckmedium über den Druckanschluß P und die Radialbohrungen 16 aus dem Hohlkolben 5 zum Arbeitsanschluß A strömen. In diesem Falle wird der Kolben oder der Rotor des Verstellers von der anderen Seite mit Druckmedium beaufschlagt, so daß der Kolben oder der Rotor in der anderen Richtung bewegt wird. Auf diese Weise wird die Nockenwelle in einer anderen Richtung gedreht, als wenn das Druckmedium über den Arbeitsanschluß B zum Versteller gelangt. Das in der jeweils anderen Druckkammer des Verstellers befindliche Druckmedium strömt über den Tankanschluß T zum Tank zurück.

Damit auch in dieser Stellung des Hohlkolbens eine Kompensation der ventilexternen Systemleckage gewährleistet ist, ist der Hohlkolben 5 im Bereich des Arbeitsanschlusses B des Ventilgehäuses 1 mit wenigstens einer seine Wandung durchsetzenden Leckagebohrung 21 versehen. Vorteilhaft hat der Hohlkolben 5 mehrere über den Umfang verteilt angeordnete Leckagebohrungen. Über sie kann ein geringer Teil des über den Druckanschluß P zugeführten Druckmediums auch dann zum Arbeitsanschluß B gelangen, wenn der Hohlkolben 5 die Verbindung zum Druckanschluß P geschlossen hat. Da in diesem Falle der Arbeitsanschluß B auch mit dem Tankanschluß P verbunden ist, strömt ein Teil des Leckagemediums auch in den Tankanschluß T.

Beim beschriebenen Ausführungsbeispiel ist die Leckagekompensation an beiden Arbeitsanschlüssen A und B vorgesehen. Abhängig vom Versteller, vom Drehübertrager, vom Motoreinbau, von der Elektronik und dergleichen kann die Leckagekompensation auch nur am Arbeitsanschluß A oder B vorgesehen sein. In diesem Falle weist der Hohlkolben 5 nur die Leckagebohrung 20 oder 21 auf.

Im dargestellten Ausführungsbeispiel haben die Leckagebohrungen 20 und 21 gleichen Durchflußquerschnitt. Es ist selbstverständlich möglich, daß die Leckagebohrungen 20 und 21 unterschiedliche Durchflußquerschnitte haben, so daß eine optimale Anpassung an die jeweiligen Einbauverhältnisse möglich ist.

Die Leckagebohrungen 20, 21 sind als Düsen ausgelegt. Die Auslegung der Zuleitungen kann auch als Blende erfolgen. Die Leckagekompensation erfolgt vorteilhaft temperaturabhängig.

Das beschriebene Proportionalmagnetventil hat eine asymmetrische Kennlinie und weist im Überdeckungsbereich eine erhöhte Leckage auf.

Durch unterschiedlich große Leckagebohrungen 20, 21 ist eine Anpassung der Leckagekompensation an unterschiedlich große Leckagen möglich, wie sie beim Drehübertrager gegeben ist, mit dem das Druckmedium vom Proportionalmagnetventil zum Versteller geleitet wird.

Da über die Leckagebohrungen 20, 21 stets Druckmedium in den Verstellkammern des Verstellers vorhanden ist, ist gewährleistet, daß der Verriegelungsmechanismus dieser Versteller zuverlässig entriegelt wird. Wird der Elektromagnet nicht mehr bestromt, wird der Hohlkolben 5 unter der Kraft der Druckfeder 8 in seine in der Zeichnung dargestellte Ausgangslage zurückgeschoben. Der Hohlkolben 5 führt hierbei auch den Stößel 7 in seine Ausgangslage zurück.

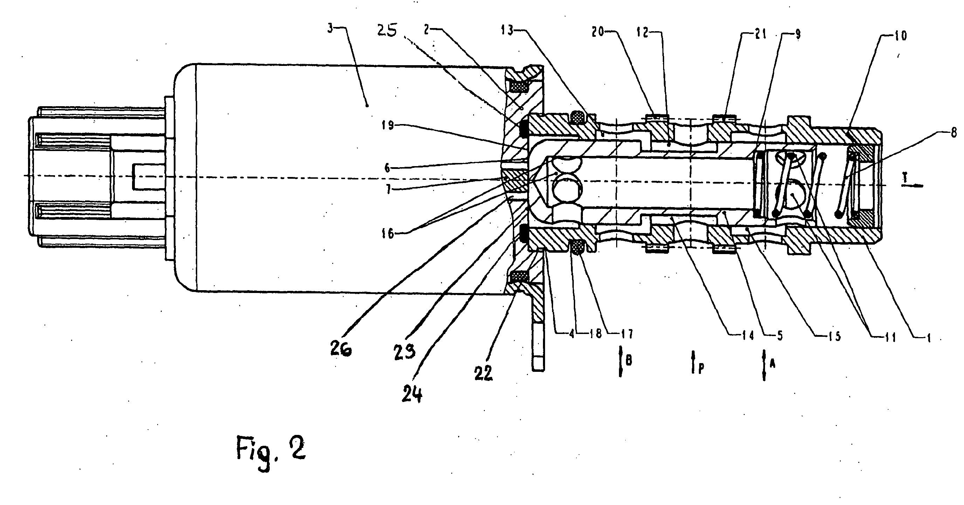

Die in Fig. 2 dargestellte Ausführungsform unterscheidet sich vom vorigen Ausführungsbeispiel dadurch, daß der Druckanschluß P im Ventilgehäuse 1 vorgesehen ist. Dadurch wird das Druckmedium über diesen Druckanschluß P radial zugeführt. Der Tankanschluß T ist an dem den Sicherungsring 10 aufweisenden Ende des Ventilgehäuses 1 vorgesehen. Das durch die Verstellung des Kolbens 5 verdrängte Druckmedium strömt damit axial über den Tankanschluß T des Proportionalmagnetventils zum Tank zurück.

In der in Fig. 2 dargestellten Stellung des Hohlkolbens 5 ist der Druckanschluß P über die Nut 14 mit dem Arbeitsanschluß B verbunden. Der andere Arbeitsanschluß A ist über die Radialbohrungen 11 im Hohlkolben 5 mit dem Tankanschluß T verbunden.

Wird der Elektromagnet erregt, wird der Stößel 7 ausgefahren, wodurch der Hohlkolben 5 gegen die Kraft der Druckfeder 8 verschoben wird. Wird der Hohlkolben 5 ausreichend weit verschoben, wird der Arbeitsanschluß B gegen den Druckanschluß P geschlossen und dafür die Verbindung zum Arbeitsanschluß A hergestellt. Dabei wird die Verbindung zwischen dem Arbeitsanschluß A und dem Tankanschluß T geschlossen. Dafür gelangen die Radialbohrungen 16 im Hohlkolben 5 in den Bereich des Arbeitsanschlusses B, so daß das Druckmedium über die Radialbohrung 16 und den Hohlkolben 5 zum Tankanschluß T gelangen kann. Das Ventilgehäuse 1 ist außenseitig in Höhe der Stege zwischen den Arbeitsanschlüssen A, B und dem Druckanschluß P mit den Leckagedurchtritten 20, 21 versehen. Sie sind beispielsweise als Bohrungen ausgebildet und über den Umfang des Ventilgehäuses 1 verteilt angeordnet. Grundsätzlich reicht eine Bohrung 20 bzw. 21 als Leckagedurchtritt aus.

Im Unterschied zur vorigen Ausführungsform ist das Gehäuse 2 des Elektromagnetteiles 3 stirnseitig mit einer Vertiefung 22 versehen, in die das Ventilgehäuse 2 mit einem Ende ragt. Im Boden 23 der Vertiefung 22 befindet sich eine Ringnut 24, die einen Dichtring 25 aufnimmt. An ihm liegt das Ventilgehäuse 2 stirnseitig an. Das Ventilgehäuse 2 ist mit seinem entsprechenden Ende in die Vertiefung 22 eingepreßt. In den Boden 23 der Vertiefung 22 mündet eine Axialbohrung 26, in welcher der Stößel 7 untergebracht ist. Wie bei der vorigen Ausführungsform liegt der Stößel 7 am geschlossenen Boden 6 des Hohlkolbens 5 an.

Im übrigen ist dieses Ausführungsbeispiel gleich ausgebildet wie die Ausführungsform gemäß Fig. 1.

Die Ventilgehäuse 1 der beiden beschriebenen Ausführungsformen können untereinander ausgetauscht werden.

## Patentansprüche

1. Nockenwellenverstelleinrichtung für Kraftfahrzeuge, mit einem Versteller, der ein Verstellerelement aufweist, das durch ein Proportionalmagnetventil betätigbar ist, das ein Ventilgehäuse (1) aufweist, in dem ein Kolben (5) verschiebbar ist und das mindestens einen Arbeitsanschluß (A, B), einen Tankanschluß (T) und einen Druckanschluß (P) aufweist, über den ein Druckmedium, vorzugsweise Hydrauliköl, in den Kolben (5) zuführbar ist, der mindestens einen Durchlaß (11, 16) für das Druckmedium aufweist,
**dadurch gekennzeichnet, daß** der Druckanschluß (P) zum Einspannen des Verstellerelementes mittels des Druckmediums über wenigstens einen Leckagedurchtritt (20, 21) mit dem Arbeitsanschluß (A, B) verbunden ist.

2. Nockenwellenverstelleinrichtung nach Anspruch 1,
**dadurch gekennzeichnet, daß** der Leckagedurchtritt (20, 21) im Kolben (5) vorgesehen ist.

3. Nockenwellenverstelleinrichtung nach Anspruch 1,
**dadurch gekennzeichnet, daß** der Leckagedurchtritt im Ventilgehäuse (1) vorgesehen ist.

4. Nockenwellenverstelleinrichtung nach einem der Ansprüche 1 bis 3,
**dadurch gekennzeichnet, daß** der Kolben (5) ein Hohlkolben ist, der als Durchlaß für das Druckmedium wenigstens eine seine Wandung durchsetzende Öffnung (11, 16) aufweist.

5. Nockenwellenverstelleinrichtung nach einem der Ansprüche 1 bis 4,
**dadurch gekennzeichnet, daß** das Ventil zwei Arbeitsanschlüsse (A, B) aufweist, denen jeweils wenigstens eine die Wandung des Kolbens 5) durchsetzende Öffnung (11, 16) zugeordnet ist.

6. Nockenwellenverstelleinrichtung nach Anspruch 5,
**dadurch gekennzeichnet, daß** beide Arbeitsanschlüsse (A, B) über wenigstens einen Leckage-Durchtritt (20, 21) mit dem Druckanschluß (P) ständig verbunden sind.

7. Nockenwellenverstelleinrichtung nach Anspruch 5 oder 6,
**dadurch gekennzeichnet, daß** beide Leckagedurchtritte (20, 21) gleichen Durchflußquerschnitt haben.

8. Nockenwellenverstelleinrichtung nach Anspruch 5 oder 6,
**dadurch gekennzeichnet, daß** beide Leckagedurchtritte (20, 21) unterschiedliche Durchflußquerschnitte haben.

9. Nockenwellenverstelleinrichtung nach einem der Ansprüche 1 bis 8,
**dadurch gekennzeichnet, daß** der Leckagedurchtritt (20, 21) düsenförmig ausgebildet ist.

10. Nockenwellenverstelleinrichtung nach einem der Ansprüche 1 bis 9,
**dadurch gekennzeichnet, daß** der Leckagedurchtritt (20, 21) eine die Wandung des Kolbens (5) durchsetzende Öffnung ist.

11. Nockenwellenverstelleinrichtung nach einem der Ansprüche 1 bis 9,
**dadurch gekennzeichnet, daß** der Leckagedurchtritt (20, 21) durch entsprechend ausgebildete Öffnungen im Ventilgehäuse (1) ausgeführt ist.

12. Nockenwellenverstelleinrichtung nach Anspruch 11,
**dadurch gekennzeichnet, daß** der Leckagedurchtritt (20, 21) durch Bohrungen in den Stegen zwischen den Arbeitsanschlüssen (A, B) und dem Druckanschluß (P) gebildet ist.

13. Nockenwellenverstelleinrichtung nach einem der Ansprüche 1 bis 12,
**dadurch gekennzeichnet, daß** der Leckagedurchtritt (20, 21) als Blende ausgebildet ist.

14. Nockenwellenverstelleinrichtung nach einem der Ansprüche 1 bis 13,
**dadurch gekennzeichnet, daß** der Kolben (5) mehrere über seinen Umfang verteilt angeordnete Leckagedurchtritte (20, 21) aufweist.

15. Nockenwellenverstelleinrichtung nach einem der Ansprüche 1 bis 14,
**dadurch gekennzeichnet, daß** der Leckagedurchtritt (21, 21) beachbart zur Durchflußöffnung (11, 16) für das Druckmedium vorgesehen ist.

16. Nockenwellenverstelleinrichtung nach einem der Ansprüche 1 bis 15,
**dadurch gekennzeichnet, daß** der Kolben (5) einen geschlossenen Boden (6) hat, mit dem er an einem Stößel (7) eines Elektromagnetteiles (3) des Ventiles anliegt.

## Claims

1. Camshaft adjusting device for motor vehicles, having an adjuster which comprises an adjusting element which may be actuated by a proportional solenoid valve which comprises a valve housing (1) in which a piston (5) may be displaced and which comprises at least one working connection (A, B), a tank connection (T) and a pressure connection (P), via which a pressure medium, preferably hydraulic oil, may be supplied into the piston (5), which comprises at least one through-passage (11, 16) for the pressure medium, **characterised in that** the pressure connection (P) is connected to the working connection (A, B) for clamping the adjusting element by means of the pressure medium via at least one leakage passage (20, 21).

2. Camshaft adjusting device according to Claim 1, **characterised in that** the leakage passage (20, 21) is provided in the piston (5).

3. Camshaft adjusting device according to Claim 1, **characterised in that** the leakage passage is provided in the valve housing (1).

4. Camshaft adjusting device according to one of Claims 1 to 3, **characterised in that** the piston (5) is a hollow piston which comprises at least one opening (11, 16) penetrating its wall as a through-passage for the pressure medium.

5. Camshaft adjusting device according to one of Claims 1 to 4, **characterised in that** the valve comprises two working connections (A, B) to which at least one respective opening (11, 16) penetrating the wall of the piston (5) is associated.

6. Camshaft adjusting device according to Claim 5, **characterised in that** the two working connections (A, B) are continually connected to the pressure connection (P) via at least one leakage passage (20, 21).

7. Camshaft adjusting device according to Claim 5 or 6, **characterised in that** the two leakage passages (20, 21) have the same flow cross section.

8. Camshaft adjusting device according to Claim 5 or 6, **characterised in that** the two leakage passages (20, 21) have different flow cross sections.

9. Camshaft adjusting device according to one of Claims 1 to 8, **characterised in that** the leakage passage (20, 21) is configured in the form of a nozzle.

10. Camshaft adjusting device according to one of Claims 1 to 9, **characterised in that** the leakage passage (20, 21) is an opening penetrating the wall of the piston (5) .

11. Camshaft adjusting device according to one of Claims 1 to 9, **characterised in that** the leakage passage (20, 21) is formed by correspondingly configured openings in the valve housing (1).

12. Camshaft adjusting device according to Claim 11, **characterised in that** the leakage passage (20, 21) is formed by bores in the webs between the working connections (A, B) and the pressure connection (P).

13. Camshaft adjusting device according to one of Claims 1 to 12, **characterised in that** the leakage passage (20, 21) is configured as an orifice.

14. Camshaft adjusting device according to one of Claims 1 to 13, **characterised in that** the piston (5) comprises a plurality of leakage passages (20, 21) distributed over the circumference thereof.

15. Camshaft adjusting device according to one of Claims 1 to 14, **characterised in that** the leakage passage (21, 21) is provided adjacent to the throughflow opening (11, 16) for the pressure medium.

16. Camshaft adjusting device according to one of Claims 1 to 15, **characterised in that** the piston (5) has a closed base (6), with which it rests against a plunger (7) of an electromagnetic part (3) of the valve.

## Revendications

1. Dispositif de réglage d'arbre à cames pour véhicules, avec un déphaseur présentant un élément de déphasage pouvant être actionné par une électrovanne proportionnelle présentant un boîtier de vanne (1) dans lequel un piston (5) peut être déplacé et présentant au moins un raccord de travail (A, B), un raccord de réservoir (T) et un raccord de pression (P) par l'intermédiaire duquel un agent de pressurisation, de préférence de l'huile hydraulique, peut être amené dans le piston (5) et présentant au moins un passage (11, 16) pour l'agent de pressurisation,
**caractérisé en ce que** le raccord de pression (P) est relié au raccord de travail (A, B) par l'intermédiaire d'au moins un passage de fuite (20, 21) pour tendre l'élément de déphasage à l'aide de l'agent de pressurisation.

2. Dispositif de réglage d'arbre à cames selon la revendication 1, **caractérisé en ce que** le passage de fuite (20, 21) est prévu dans le piston (5).

3. Dispositif de réglage d'arbre à cames selon la revendication 1,
**caractérisé en ce que** le passage de fuite est prévu dans le boîtier de vanne (1).

4. Dispositif de réglage d'arbre à cames selon l'une quelconque des revendications 1 à 3,
**caractérisé en ce que** le piston (5) est un piston creux présentant au moins une ouverture (11, 16) entrecoupant sa paroi pour laisser passer l'agent de pressurisation.

5. Dispositif de réglage d'arbre à cames selon l'une quelconque des revendications 1 à 4,
**caractérisé en ce que** la vanne présente deux raccords de travail (A, B) auxquelles sont respectivement associées au moins une ouverture (11, 16) entrecoupant la paroi du piston (5).

6. Dispositif de réglage d'arbre à cames selon la revendication 5,
**caractérisé en ce que** les deux raccords de travail (A, B) sont reliés en permanence au raccord de pression (P) par l'intermédiaire d'au moins un passage de fuite (20, 21).

7. Dispositif de réglage d'arbre à cames selon la revendication 5 ou 6,
**caractérisé en ce que** les deux passages de fuite (20, 21) ont des sections transversales d'écoulement identiques.

8. Dispositif de réglage d'arbre à cames selon la revendication 5 ou 6,
**caractérisé en ce que** les deux passages de fuite (20, 21) ont des sections transversales d'écoulement différentes.

9. Dispositif de réglage d'arbre à cames selon l'une quelconque des revendications 1 à 8,
**caractérisé en ce que** le passage de fuite (20, 21) prend la forme d'une buse.

10. Dispositif de réglage d'arbre à cames selon l'une quelconque des revendications 1 à 9,
**caractérisé en ce que** le passage de fuite (20, 21) est une ouverture entrecoupant la paroi du piston (5).

11. Dispositif de réglage d'arbre à cames selon l'une quelconque des revendications 1 à 9,
**caractérisé en ce que** le passage de fuite (20, 21) est effectué à l'aide d'ouvertures réalisées de façon correspondante dans le boîtier de vanne (1).

12. Dispositif de réglage d'arbre à cames selon la revendication 11,
**caractérisé en ce que** le passage de fuite (20, 21) est formé d'alésages réalisés dans les traverses entre les raccords de travail (A, B) et le raccord de pression (P).

13. Dispositif de réglage d'arbre à cames selon l'une quelconque des revendications 1 à 12,
**caractérisé en ce que** le passage de fuite (20, 21) prend la forme d'un obturateur.

14. Dispositif de réglage d'arbre à cames selon l'une quelconque des revendications 1 à 13,
**caractérisé en ce que** le piston (5) présente plusieurs passages de fuite (20, 21) répartis sur sa périphérie.

15. Dispositif de réglage d'arbre à cames selon l'une quelconque des revendications 1 à 14,
**caractérisé en ce que** le passage de fuite (20, 21) est prévu à côté de l'ouverture d'écoulement (11, 16) de l'agent de pressurisation.

16. Dispositif de réglage d'arbre à cames selon l'une quelconque des revendications 1 à 15,
**caractérisé en ce que** le piston (5) a un fond (6) fermé avec lequel il repose contre un poussoir (7) d'une partie électromagnétique (3) de la vanne.
